# EUROPÄISCHE PATENTSCHRIFT

(11) **EP 2 523 339 B1**
(45) Veröffentlichungstag und Bekanntmachung des Hinweises auf die Patenterteilung: **08.01.2020**
(21) Anmeldenummer: 12166719.0
(22) Anmeldetag: 04.05.2012
(51) Int. Cl.: H02M 7/537, H02J 1/14, H02J 3/38, H02M 7/797

(54) **Verfahren und Vorrichtung zum Erzeugen von Energie mittels einer Photovoltaikanlage mit Ausgleich von Energie zwischen den Zweigen der Gleichspannungsgeneratoren**
Method and apparatus for energy generation by a photovoltaic arrangement with compensation of energy between the branches of the photovoltaic generators
Procédé et dispositif de génération d'énergie au moyen d'une installation photovoltaïque avec une compensation d'énergie entre les branches des générateurs photovoltaïques

(30) Priorität: 11.05.2011 DE 102011075658
(43) Veröffentlichungstag der Anmeldung: 14.11.2012
(73) Patentinhaber: SF Suntech Deutschland GmbH, 78467 Konstanz (DE)
(72) Erfinder: Hauser, Thomas, 78467 Konstanz (DE); Dobrenko, Alexey, 78464 Konstanz (DE); Schilli, Marco, 78462 Konstanz (DE); Larionov, Pavel, 78464 Konstanz (DE)
(74) Vertreter: Isarpatent

(56) Entgegenhaltungen:
- US-A1- 2010 308 660
- HASHIMOTO O ET AL: "A novel high performance utility interactive photovoltaic inverter system", INDUSTRY APPLICATIONS CONFERENCE, 2000. CONFERENCE RECORD OF THE 2000 IEEE 8-12 OCTOBER 2000, PISCATAWAY, NJ, USA,IEEE, Bd. 4, 8. Oktober 2000 (2000-10-08), Seiten 2255-2260, XP010522571, ISBN: 978-0-7803-6401-1

## Beschreibung

### GEBIET DER ERFINDUNG

Die Erfindung betrifft ein Verfahren zum Erzeugen von Energie mittels einer Photovoltaikanlage, insbesondere betrifft die Erfindung ein Verfahren zum Ausgleichen von Energie zwischen Gleichspannungsgeneratoren und einem Wechselrichter. Ferner betrifft die Erfindung eine Photovoltaikanlage.

### TECHNISCHER HINTERGRUND

Solarzellen sind zur Erzeugung elektrischer Energie aus Sonnenenergie allgemein bekannt. Solarzellen können zu Solarzellenmodulen oder auch so genannten Solarzellenstrings zusammengefasst werden. Die gesamte Anlage, welche aus Sonnenenergie elektrischen Strom erzeugt und diesen in ein öffentliches Versorgungsnetzwerk einspeist, wird üblicherweise als Photovoltaikanlage bezeichnet.

Die in einer Photovoltaikanlage erzielbare elektrische Leistung ist von der Anzahl der verwendeten Solarzellen und vom Wirkungsgrad, also vom Verhältnis des Anteils der in das Versorgungsnetz eingespeisten Leistung zu der erzeugten Leistung, abhängig.

Bei Photovoltaikanlagen werden typischerweise bis zu drei Solarzellenstrings mittels eines gemeinsamen Bezugspotentials mit einem transformatorlosen Wechselrichter verbunden. Hier erzeugt jeweils ein erster Solarzellenstring ein gegenüber diesem Bezugspotential positives Potential und jeweils ein zweiter Solarzellenstring ein gegenüber diesem Bezugspotential negatives Potential. Diese Potentiale werden an den Wechselrichter übertragen, der aus diesen Potentialen, die ins Versorgungsnetz eingespeiste Wechselspannung erzeugt. Diese Beschaltung kann für 1-phasige Wechselrichter ebenso wie für 3-phasige Wechselrichter eingesetzt werden. Insbesondere ist diese Beschaltung für 3-phasige Wechselrichter von Vorteil, da 3-phasige Wechselrichter zwei Zwischenkreise benötigen.

Bei gleicher Dimensionierung der Solarzellenstrings und bei sonst gleichen Bedingungen sollen sich die erzeugten Energiemengen im positiven und negativen Zweig identisch entsprechen. Problematisch ist allerdings, dass sich in dem erzeugten Wechselstrom eine Unsymmetrie einstellen kann, wenn z.B. ein Solarzellenstring zumindest teilweise abgeschattet ist oder die Solarzellenstrings in den beiden Zweigen bedingt durch ihre Toleranzen unterschiedliche Nennleistungen aufweisen. In einem solchen Fall wird durch den Wechselrichter nicht nur ein Wechselstrom, sondern auch unerwünschterweise ein Gleichstrom erzeugt. Dies ist ein unerwünschter Effekt, durch welchen elektrische Wechselstromverbraucher, die an einem Versorgungsnetz angeschlossen sind, Schaden nehmen können. Ferner geben Standards und Normen einen Grenzwert für das Einspeisen eines Gleichstroms in öffentliche Versorgungsnetzwerke vor, der nicht überschritten werden darf.

Um das oben genannte Problem zu umgehen, kann beispielsweise die Leistung derjenigen Solarzelle, welche aktuell gerade mehr elektrische Energie liefert, auf einen solchen Leistungswert geregelt werden, welcher der Leistung der Solarzelle entspricht, welche weniger elektrische Energie liefert. Durch dieses Verfahren wird allerdings solar erzeugte elektrische Energie verloren, was den Wirkungsgrad herabsetzt und was es letztendlich zu vermeiden gilt.

Eine weitere Möglichkeit, das Einspeisen von Gleichstrom in ein öffentliches Versorgungsnetzwerk zu verhindern, ist der Einsatz von so genannten Multistring-Schaltungen, bei denen jeder Solarzellenstring einen dedizierten DC-Steller aufweist, welcher den Solarzellenstring in einem möglichst optimalen Betriebspunkt betreibt. Hier werden allerdings unerwünschte Verluste durch die DC-Steller bzw. Spannungswandler erzeugt, auch wenn beide Solarzellen bzw. Solarzellenstrings die gleiche elektrische Leistung erzeugen. Da die DC-Steller für die Nennleistung der Solarzellen bzw. Solarzellenstrings ausgelegt sein müssen, erfordert dies entsprechend große und auch teure Bauteile.

Die Patentveröffentlichung US 2010/0308660 A1 beschreibt eine Schaltung zur Maximierung der Leistung aus mehreren in Reihe geschalteten Stromquellen, die unterschiedliche Gleichströme liefern. Dabei wird der Differenzstrom der ungleichen Ströme von den Stromquellen abgeleitet und dessen Energie in einem induktiven Magnetfeldspeicher zunächst gespeichert und dann zum Gesamtstrom der in Reihe geschalteten Stromquellen aufaddiert. Dazu werden Schalter mit einem einstellbaren Betriebszyklus abwechselnd getaktet.

Das Dokument "A novel high performance utility interactive photovoltaic inverter system" Industry Applications Conference 2000, Conference Record of the 2000 IEEE 8-12 October 2000, Piscataway, NJ, USA, IEEE, Bd. 4, 8. Oktober 2000, Seiten 2255-2260, beschreibt ein photovoltaisches Wechselrichtersystem, das die erzeugte Leistung jedes in Serie geschalteten photovoltaischen Moduls kontrollieren kann.

### ZUSAMMENFASSUNG DER ERFINDUNG

Vor diesem Hintergrund ist es eine Aufgabe der vorliegenden Erfindung, den Wirkungsgrad bei einer Photovoltaikanlage zu erhöhen.

Diese Aufgabe wird erfindungsgemäß durch ein Verfahren mit den Merkmalen des Anspruchs 1 und eine Photovoltaikanlage mit den Merkmalen des Anspruchs 6 gelöst. Vorteilhafte Ausführungsformen sind in den abhängigen Ansprüchen definiert.

Die der vorliegenden Erfindung zu Grunde liegende Erkenntnis besteht darin, dass die Gleichspannungszweige, über welche elektrische Energie von dem mindestens einen Gleichspannungsgenerator an den Wechselrichter übertragen wird, die gleiche elektrische Leistung übertragen sollen, um eine effiziente und möglichst gleichanteilsfreie Einspeisung von elektrischem Strom in ein öffentliches Versorgungsnetzwerk zu ermöglichen. Ist nur ein Gleichspannungsgeneratoren vorgesehen, oder erzeugen die Gleichspannungsgeneratoren, welche den unterschiedlichen Gleichspannungszweigen zugeordnet sind, eine unterschiedliche Menge an elektrischer Energie, so steht auf den einzelnen Gleichspannungszweigen nicht die gleiche elektrische Leistung bereit. Mittels des erfindungsgemäßen Verfahrens sowie einer erfindungsgemäßen Schaltung ist es nun möglich, ein Energiegleichgewicht zwischen den einzelnen Gleichspannungszweigen herzustellen.

Die Idee der vorliegenden Erfindung besteht darin, dass elektrische Energie desjenigen Gleichspannungszweigs, welcher die größere elektrische Leistung aufweist, in induktiven Energiespeicherelementen gespeichert wird und mittels einer geeigneten Ansteuerung einer Schalteinrichtung in denjenigen Gleichspannungszweig, welcher die geringere elektrische Leistung aufweist, übertragen wird. Dort wird die elektrische Energie zunächst in kapazitiven Energiespeicherelementen gespeichert, bis diese zu dem Wechselrichter übertragen wird, oder die Energie wird direkt an den Wechselrichter weitergeleitet.

Die vorliegende Erfindung macht sich die Eigenschaft induktiver Energiespeicherelemente zu Nutze, um mit diesen Elementen einer Änderung des Stromflusses mittels einer induzierten Gegenspannung entgegen zu wirken. Da der Betrag dieser Gegenspannung von der Änderungsgeschwindigkeit des Stromflusses abhängig ist, kann dieser Betrag bei einem abrupten Abschalten des Stroms, welcher durch das induktive Energiespeicherelement fließt, hohe Werte annehmen. Diese Spannungen können groß genug sein, um eine Energieübertragung in denjenigen Gleichspannungszweig, welcher die geringere elektrische Leistung aufweist, zu bewirken. Dabei wird die in dem Magnetfeld des induktiven Energiespeicherelements gespeicherte magnetischen Energie in elektrische Energie umgewandelt und in denjenigen Gleichspannungszweig, welcher die geringere elektrische Leistung aufweist, übertragen. Werden für den Ausgleich der elektrischen Energie zwischen den Gleichspannungszweigen ein gemeinsames induktives Energiespeicherelement und jeweils nur ein Schalter für jeden Gleichspannungszweig vorgesehen, so wird ein kostengünstiger Einsatz des Verfahrens und ein einfacher und günstiger Aufbau der Photovoltaikanlage ermöglicht.

Sind die Gleichspannungsgeneratoren für eine Spannung von z.B. bis zu 1000 Volt ausgelegt, dann können einzelne Schalter für jeden Gleichspannungszweig eingesetzt werden.

Um die hohe Schaltspannung zu reduzieren, setzt die vorliegende Erfindung in einer alternativen Ausführungsform jeweils zwei in Reihe angeordnete Schalter für jeden Gleichspannungszweig vor, welche jeweils einer Wicklung eines induktiven Energiespeicherelements zugeordnet sind. Dadurch werden sowohl die Schalter als auch die Wicklungen des induktiven Energiespeicherelements nur hälftig mit der von den Gleichspannungsgeneratoren erzeugten elektrischen Spannung beaufschlagt. Damit ist eine Energieübertragung zwischen den Gleichspannungszweigen möglich, die jeweils hohe Spannungen von z.B. bis zu 1000 Volt aufweisen können.

Wird die vorliegende Erfindung in einer Solaranlage mit genau einem Gleichspannungsgenerator betrieben, so überträgt die Schalteinrichtung 50% der durch den Gleichspannungsgenerator in einem Gleichspannungszweig erzeugten Energie auf den jeweils anderen Gleichspannungszweig.

Vorteilhafte Ausführungsformen und Weiterbildungen ergeben sich aus den Unteransprüchen sowie aus der Beschreibung unter Bezugnahme auf die Figuren der Zeichnungen.

In einer Ausführungsform weist die Schalteinrichtung einen ersten Schalter und einen zweiten Schalter auf, deren Lastpfade in Reihe zueinander und zwischen dem ersten Gleichspannungszweig und dem zweiten Gleichspannungszweig angeordnet sind, wobei das gemeinsame induktive Energiespeicherelement mit einem Abgriff zwischen dem ersten Schalter und dem zweiten Schalter verbunden ist. Bei dem Schritt des Ausgleichens der Energie wird hier lediglich einer der beiden Schalter geschaltet. Durch die Verwendung eines einzelnen Schalters für jeden der Gleichspannungszweige, welche ein gemeinsames induktives Energiespeicherelement nutzen, um den Leistungsausgleich zwischen den Gleichspannungszweigen durchzuführen, wird ein schaltungstechnisch sehr einfacher und robuster Aufbau der Schalteinrichtung ermöglicht. Ferner ermöglicht dieser Aufbau eine sehr einfache Ansteuerung der Schalteinrichtung, da jeweils nur ein einzelner Schalter geschaltet werden muss, um elektrische Energie von einem Gleichspannungszweig in einen anderen Gleichspannungszweig zu übertragen. Durch die Nutzung eines einzigen induktiven Energiespeicherelements ergibt sich bedingt durch den Wegfall eines induktiven Energiespeicherelements ein kostengünstiger Aufbau der Schalteinrichtung.

In einer weiteren Ausführungsform weist der Schritt des Ausgleichens der Energie der Schalteinrichtung auf, dass die Schalter, desjenigen Gleichspannungszweigs, welcher die größere elektrische Leistung aufweist, bevor eine Energieübertragung zwischen den Gleichspannungszweigen stattfindet, derart geschaltet werden, dass die zwei in Serie geschalteten kapazitiven Energiespeicherelemente desjenigen Gleichspannungszweigs, welcher die größere elektrische Leistung aufweist, bevor eine Energieübertragung stattfindet, die gleiche elektrische Spannung aufweisen. Auch wenn die zwei in Serie geschalteten kapazitiven Energiespeicherelemente parallel zu den jeweiligen Gleichspannungsgeneratoren der einzelnen Gleichspannungszweige geschaltet sind, ist es möglich, dass diese eine unterschiedliche Spannung aufweisen. Werden die zwei Wicklung des induktive Energiespeicherelements mit insgesamt vier Wicklungen eines Gleichspannungszweiges zugeschaltet, wenn die kapazitiven Energiespeicherelemente unterschiedliche Spannungen aufweisen, bildet sich ein Transformator und findet ein Spannungsausgleich statt, welcher einen Stromfluss bewirkt. Durch diesen Stromfluss werden sowohl die induktiven Energiespeicherelemente als auch die Schalter belastet. Werden die Spannungen der kapazitiven Energiespeicherelemente durch das Schalten eines einzelnen Schalters des entsprechenden Gleichspannungszweigs ausgeglichen, bevor eine Energieübertragung stattfindet, kann diese Belastung reduziert oder sogar beseitigt werden. Dadurch wird die Lebensdauer der einzelnen Bauteile erhöht.

In noch einer weiteren Ausführungsform weist der erste Gleichspannungszweig ein gegenüber einem Bezugspotential positives elektrisches Potential auf und/oder weist der zweite Gleichspannungszweig ein gegenüber dem Bezugspotential negatives elektrisches Potential auf. Eine derartige Ausgestaltung der Photovoltaikanlage ermöglicht eine effektive Wechselrichtung des durch die Gleichstromgeneratoren erzeugten Gleichstroms. Ferner ermöglicht eine derartige Ausgestaltung die Kopplung des Wechselrichters mit den Gleichspannungsgeneratoren über ein gemeinsames Bezugspotential. Dies verhindert parasitäre, kapazitive Ableitströme der Gleichspannungsgeneratoren gegen Erdpotential.

In einer weiteren Ausführungsform wird beim Ausgleichen der Energie die Schalteinrichtung derart angesteuert, dass nach dem Ausgleichen der Energie der erste und der zweite Gleichspannungszweig den gleichen Betrag an elektrischer Energie aufweisen. Dadurch kann mittels des Wechselrichters ein symmetrischer Ausgangswechselstrom erzeugt werden, welche weitestgehend frei von Gleichanteilen ist.

In einer Ausführungsform erfolgt das Schalten der Schalteinrichtung mittels eines Pulsweiten-modulierten Steuersignals, eines Pulsfrequenz-modulierten Steuersignals und/oder eines Pulsphasen-modulierten Steuersignals. Es existiert heute eine Vielzahl von Verfahren und elektrischen Standardbauteilen, welche zumindest eine der genannten Signalarten erzeugen können. Durch den Einsatz solcher Signalarten ist es möglich, günstige und gut verfügbare Standardbauteile einzusetzen und eine einfache, robuste und kostengünstige Steuereinrichtung bereitzustellen. In einer weiteren Ausführungsform berechnet eine Steuereinrichtung eine Pulsweiten-moduliertes Steuersignal, ein Pulsfrequenz-moduliertes Steuersignal und/oder eines Pulsphasen-moduliertes Steuersignal nach einem vorgegebenen Algorithmus.

In einer Ausführungsform sind die Schalter als IGBTs und/oder als Bipolartransistoren und/oder Leistungs-FETs ausgebildet. Die genannten Halbleiterschalter weisen kurze Schaltzeiten und eine geringe Verlustleistung auf und sind geeignet, hohe Leistungen zu schalten. Der Einsatz der genannten Halbleiterschalter ermöglicht einen effizienten Betrieb der Photovoltaikanlage und damit eine erhöhte Energieausbeute. In weiteren Ausführungsformen können auch andere elektrische Schaltelemente verwendet werden, welche den jeweiligen Anforderungen genügen.

In einer Ausführungsform sind die Gleichspannungsgeneratoren als Solarzellenstrings und/oder als Solarzellenmodule ausgebildet. Ein Solarzellenstring besteht üblicherweise aus eine Vielzahl in Reihe geschalteter Solarzellen. Ein Solarzellenmodul besteht wiederum aus einer Vielzahl parallel und/oder in Reihe geschalteter einzelner Solarzellen oder Solarzellenstrings.

In einer weiteren Ausführungsform ist die Steuereinrichtung als programmgesteuerte Einrichtung, als Mikrocontroller, als Mikroprozessor, als anwendungsspezifische integrierte Schaltung, als programmierbarer Logikbaustein, als FPGA, als CPLD oder als Computerprogrammprodukt, welches in eine programmgesteuerte Einrichtung integrierbar ist, ausgebildet.

In einer weiteren Ausführungsform kann auch eine einzelne Steuervorrichtung, welche sowohl die Schalteinrichtung als auch den Wechselrichter steuert, vorgesehen sein.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockdiagramm einer Ausführungsform einer erfindungsgemäßen Photovoltaikanlage;
- Fig. 2: ein weiteres Blockdiagramm einer Ausführungsform einer erfindungsgemäßen Photovoltaikanlage;
- Fig. 2a: ein weiteres Blockdiagramm einer Ausführungsform einer erfindungsgemäßen Photovoltaikanlage;
- Fig. 3: ein weiteres Blockdiagramm einer Ausführungsform einer erfindungsgemäßen Photovoltaikanlage;
- Fig. 4: ein Ablaufdiagramm einer Ausführungsform eines erfindungsgemäßen Verfahrens;

In allen Figuren sind gleiche bzw. funktionsgleiche Elemente und Vorrichtungen - sofern nichts Anderes angegeben ist - mit denselben Bezugszeichen versehen worden.

### BESCHREIBUNG VON AUSFÜHRUNGSBEISPIELEN

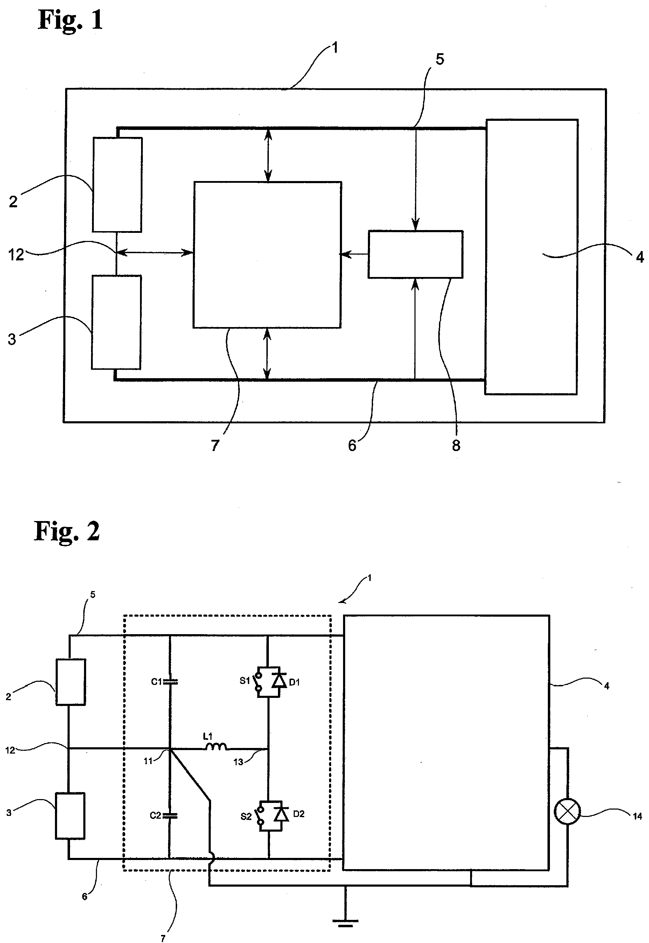

Fig. 1 zeigt ein Blockdiagramm einer Ausführungsform einer erfindungsgemäßen Photovoltaikanlage 1 mit zwei in Serie geschalteten Solarzellenmodulen 2, 3, welche über zwei Gleichspannungszweige 5, 6 mit einem Wechselrichter 4 gekoppelt sind. Ferner weist die Photovoltaikanlage in Fig. 1 eine Schalteinrichtung 7 auf, welche mit einem Abgriff zwischen den zwei Solarzellenmodulen 2, 3 gekoppelt ist. Ferner ist die Schalteinrichtung 7 mit den zwei Gleichspannungszweigen 5, 6 und einer Steuereinrichtung 8 verbunden. Die Steuereinrichtung 8 weist ebenfalls Verbindungen zu den zwei Gleichspannungszweigen 5, 6 auf.

In der in Fig. 1 dargestellten Ausführungsform weisen die Solarzellenmodule 2, 3 jeweils eine Nennspannung von 600 Volt auf. In weiteren Ausführungsformen können die Solarzellenmodule 2, 3 Nennspannungen zwischen 12 Volt und 1500 Volt und mehr, insbesondere zwischen 200 Volt und 1000 Volt, insbesondere auch zwischen 300 Volt und 700 Volt aufweisen. In noch einer weiteren Ausführungsform können anstatt der Solarzellenmodule 2, 3 einzelne Solarzellen 2, 3 oder Solarzellenstring 2, 3 vorgesehen sein.

Die in Fig. 1 dargestellte Steuereinrichtung 8 ist dazu ausgebildet, die Schalteinrichtung 7 derart anzusteuern, dass elektrische Energie von einem ersten Gleichspannungszweig 5 in einen zweiten Gleichspannungszweig 6 oder umgekehrt übertragen wird. Dazu identifiziert die Steuereinrichtung 8 denjenigen Gleichspannungszweigs 5, 6, welcher die geringere elektrische Leistung aufweist.

Die elektrische Leistung, welche die einzelnen Gleichspannungszweige aufweist, wird dabei durch bekannte Verfahren gemessen. In einer Ausführungsform kann die Leistungsmessung anhand einer Kombination von Spannungs- und Strommessung erfolgen. Die Spannungsmessung kann dabei mittels eines Analog/Digital-(A/D) Wandlers erfolgen, welcher eine analoge Spannung in einen digitalen Wert umwandelt, welcher beispielsweise von der Steuereinrichtung 8 verarbeitet werden kann. Die Strommessung kann mittels einer Spannungsmessung an einem Shunt-Widerstand oder mittels kontaktloser Messeinrichtungen, wie z.B. Strommesszangen erfolgen.

Zur Übertragung der elektrischen Energie wird in der Schalteinrichtung 7 die Selbstinduktion des induktiven Energiespeicherelements L1 oder der vier Wicklung des induktiven Energiespeicherelements mit insgesamt vier Wicklungen L2 - L5 genutzt. Dazu wird elektrische Energie in dem Magnetfeld der Wicklungen L1 - L5 in Form von magnetischer Energie gespeichert. Werden die der jeweiligen Wicklung L1 - L5 zugeordneten Schalter geöffnet, wird der Stromfluss durch die jeweilige Wicklungen L1 - L5 abrupt unterbrochen und dadurch eine selbstinduzierte Spannung in der jeweiligen Wicklung L1 - L5 aufgebaut. Diese Spannung wird in der Schalteinrichtung genutzt, um elektrische Energie von einem Gleichspannungszweig in einen anderen Gleichspannungszweig zu übertragen.

Die in Fig. 1 dargestellte Schalteinrichtung 7 und die Steuereinrichtung 8 sind als zwischen den Solarzellenmodulen 2, 3 und dem Wechselrichter 4 vorgesehene Einrichtungen ausgebildet. In einer weiteren Ausführungsform sind die Schalteinrichtung 7 und die Steuereinrichtung 8 als ein einziges Modul vorgesehen. In noch einer weiteren Ausführungsform sind die Schalteinrichtung 7 und die Steuereinrichtung 8 als Bestandteile einer Steuerelektronik der Solarzellenmodule 2, 3 oder des Wechselrichters 4 ausgeführt.

Die Steuereinrichtung 8 ist in dem in Fig. 1 dargestellten Ausführungsbeispiel als Mikrocontroller-basierte Steuereinrichtung 8 ausgeführt. Dabei erfasst während dem Betrieb der Photovoltaikanlage 1 ein Mikrocontroller die in den Gleichspannungszweigen 5, 6 vorhandene elektrische Leistung und steuert basierend auf den erfassten Leistungen die Schalteinrichtung 7 an. In weiteren Ausführungsformen kann die Steuereinrichtung 8 als ASIC, FPGA oder dergleichen ausgebildet sein.

In noch weiteren Ausführungsformen ist die Steuereinrichtung 8 als Computerprogrammprodukt ausgebildet, welches auf einem Prozessor des Wechselrichters 4 oder beispielsweise einer Anzeige- und Bedieneinrichtung der Photovoltaikanlage 1 ausgeführt wird.

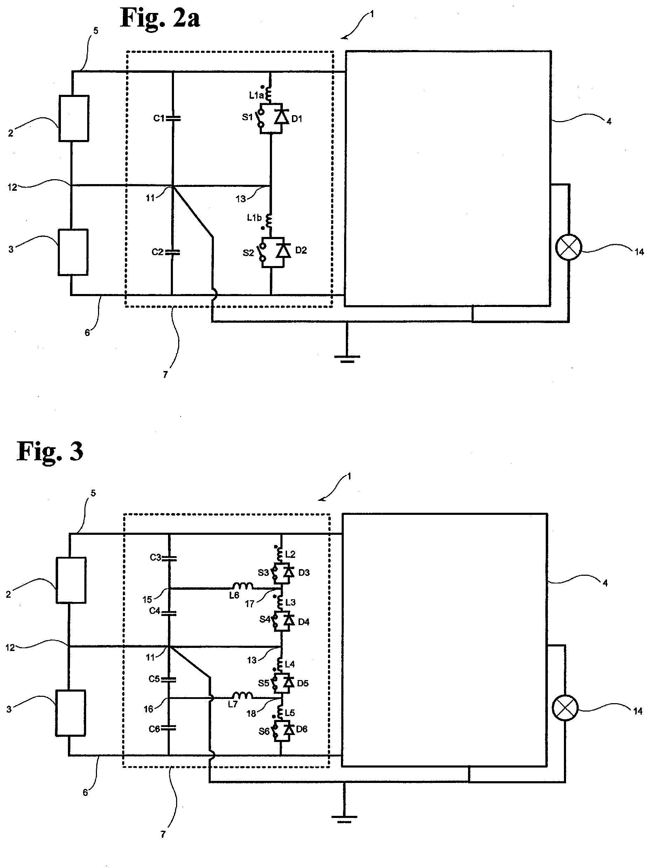

Fig. 2 zeigt ein weiteres Blockdiagramm einer Ausführungsform einer erfindungsgemäßen Photovoltaikanlage 1.

Im Unterschied zu Fig. 1 weist die Schalteinrichtung 7 in Fig. 2 zwei Kondensatoren C1, C2 auf, welche parallel zu den Solarzellenmodulen 2, 3 in Serie zueinander an die Gleichspannungszweige 5, 6 angeschlossen sind. Ein Abgriff 11 zwischen den Kondensatoren C1, C2 ist mit einem Abgriff 12 zwischen den Solarzellenmodulen verbunden. Ferner sind parallel zu den Kondensatoren C1, C2 zwei in Serie ausgeführte Schalter S1, S2 vorgesehen, welche ebenfalls mit den Gleichspannungszweigen 5, 6 verbunden sind. Dabei weist der Schalter S1 eine zu diesem parallel angeordnete Diode D1 auf, welche von einem Abgriff 13 zwischen den Schaltern S1, S2 zu dem Gleichspannungszweig 5 in Durchlassrichtung angeordnet ist. Der Schalter S2 weist eine zu diesem parallel geschaltete Diode D2 auf, welche zwischen dem Gleichspannungszweig 6 und dem Abgriff 13 in Durchlassrichtung angeordnet ist. Ferner ist eine Spule L1 mit dem Abgriff 11 und dem Abgriff 13 verbunden. Schließlich ist der Abgriff 11 mit dem gemeinsamen Bezugspotential M, mit dem Wechselrichter 4 und mit einem elektrischen Verbraucher 14 verbunden.

Im Folgenden soll beispielhaft eine Energieübertragung von Gleichspannungszweig 6 zu Gleichspannungszweig 5 beschrieben werden.

Soll in der in Fig. 2 dargestellten Anordnung elektrische Energie von dem Gleichspannungszweig 6 auf den Gleichspannungszweig 5 übertragen werden, so wird der Schalter S2 geschlossen, wodurch eine Stromfluss durch die Spule L1 ermöglicht wird. In der Spule L1 baut sich auf Grund des Stromflusses ein magnetisches Feld auf. Wird nun der Schalter S2 geöffnet, so erzeugt die Spule L1 auf Grund ihrer Induktivität eine selbstinduzierte Spannung, welche gegenüber dem elektrischen Potential des Gleichspannungszweigs 5 positiv ist und vom Betrag her größer als das elektrische Potential des Gleichspannungszweigs 5. Übersteigt diese selbstinduzierte Spannung das elektrische Potential des Gleichspannungszweigs 5 um die Schwellspannung der Diode D1, wird die Diode D1 leitend und es fließt ein Strom von der Spule L1 in den Gleichspannungszweig 5. Sinkt die selbstinduzierte Spannung unter das elektrische Potential des Gleichspannungszweigs 5, wird der Schalter S2 wieder geschlossen, um das magnetische Feld der Spule L1 erneut aufzubauen.

In einer Ausführungsform weist die Spule L1 eine Induktivität zwischen 100 µH und 1000 µH auf und ist für eine Spannung von 1000 Volt ausgelegt. Die Kondensatoren C1, und C2 weisen ca. 100 µF sowie eine Nennspannung von 600 Volt auf. In weiteren Ausführungsbeispielen kann die Induktivität der Spule L1 mehr als 2 mH und die Kapazität der Kondensatoren C1, C2 Werte von mehr als 10 mF annehmen. Ferner sind Nennspannungen der Bauteile von mehr als 1000 Volt möglich.

Fig. 2a zeigt ein weiteres Blockdiagramm einer Ausführungsform einer erfindungsgemäßen Photovoltaikanlage 1.

Im Unterschied zu Fig. 2 weist die Photovoltaikanlage 1 in Fig. 2a anstatt der Spule L1 ein einzelnes induktives Energiespeicherelement mit zwei Wicklungen L1a, L1b auf, von denen jeweils eine Wicklung L1a, L1b zu einem der Schalter S1 und S2 in Serie geschaltet ist.

Die Energieübertragung erfolgt hier ebenfalls durch das Schließen und Öffnen eines der Schalter S1 oder S2.

Fig. 3 zeigt ein weiteres Blockdiagramm einer Ausführungsform einer erfindungsgemäßen Photovoltaikanlage 1. Die in Fig. 3 gezeigte Photovoltaikanlage 1 unterscheidet sich dabei von der in Fig. 2 gezeigten Photovoltaikanlage 1 dahingehend, dass vier Kondensatoren C3, C4, C5, C6, welche parallel zu den Solarzellenmodulen 2, 3 in Serie an die Gleichspannungszweige 5, 6 angeschlossen sind, vorgesehen sind.

Ein Abgriff 11, welcher sich zwischen den zwei Kondensatoren C3, C4, welche dem Gleichspannungszweig 5 zugeordnet sind, und den zwei Kondensatoren C5, C6 befindet, welche dem Gleichspannungszweig 6 zugeordnet sind, ist elektrisch mit einem Abgriff 12 zwischen den zwei Solarzellenmodulen 2, 3 und mit einem gemeinsamen Bezugspotential M verbunden. Ferner sind der Wechselrichter 4, der elektrische Verbraucher 14 und ein Abgriff 13, welcher sich zwischen den zwei Spulen L2, L3, welche dem Gleichspannungszweig 5 zugeordnet sind, und den zwei Spulen L4, L5 befindet, welche dem Gleichspannungszweig 6 zugeordnet sind, mit dem Bezugspotential M verbunden.

Die vier Spulen L2, L3, L4, L5 sind parallel zu den vier Kondensatoren C3, C4, C5, C6 angebracht, wobei den Spulen L2, L3, L4, L5 jeweils ein Schalter S3, S4, S5, S6 in Serie vorgeschaltet ist, wobei jeder Schalter eine parallel zu diesem von dem Gleichspannungszweig 6 zu dem Gleichspannungszweig 5 in Durchlassrichtung angeordnete Diode D3, D4, D5, D6 aufweist.

Schließlich weist die Ausführungsform in Fig. 3 zwei Spulen L6, L7 auf. Spule L6 befindet sich zwischen einem Abgriff 15, welcher sich zwischen den zwei Kondensatoren C3 und C4 befindet, und einem Abgriff 17, welcher sich zwischen den zwei Spulen L2 und L3 befindet. Spule L7 befindet sich zwischen einem Abgriff 16, welcher sich zwischen den zwei Kondensatoren C5 und C6 befindet, und einem Abgriff 18, welcher sich zwischen den zwei Spulen L4 und L5 befindet. Die Spulen L3 und L4 sind mit den Spulen L5 und L6 magnetisch gegensinnig gekoppelt. Dies wird durch einen Punkt an dem oberen Ende der Spulen L3 und L4 und einen Punkt an dem unteren Ende der Spulen L5 und L6 deutlich gemacht.

Heute sind Halbeiterschalter für Spannungen von üblicherweise bis zu 1200 Volt verfügbar. Moderne Solarzellenmodule 2, 3 können zusammen aber Spannungen von mehr als 1200 Volt erzeugen.

In der in Fig. 3 gezeigten Ausführungsform verteilt sich die elektrische Spannung, welche die einzelnen Solarzellenmodule 2, 3 erzeugen, auf die jeweils in Serie angeordneten Bauelemente, wie zum Beispiel die Kondensatoren C3, C4, C5, C6, Schalter S3, S4, S5, S6 und Spulen L2, L3, L4, L5. Daher erlaubt es die in Fig. 3 dargestellte Ausführungsform übliche Halbleiterbauelemente, insbesondere für die Schalter S3, S4, S5, S6, einzusetzen, auch wenn die Solarzellenmodule zusammen Spannungen erzeugen, welche über 1200 Volt liegen.

Soll mittels der in Fig. 3 dargestellten Schaltungsanordnung elektrische Energie von einem Gleichspannungszweig 5, 6 in den anderen Gleichspannungszweig 6, 5 übertragen werden, so werden zuerst die Kondensatoren C3, C4 auf das Potential des Solarzellenmoduls 2 und die Kondensatoren C5, C6 auf das Potential des Solarzellenmoduls 3 aufgeladen.

Auf Grund von z.B. Bauteiltolleranzen kann es vorkommen, dass nach diesem Aufladen die Kondensatoren C3 und C4 unterschiedliche Spannung aufweisen und/oder die Kondensatoren C5 und C6 unterschiedliche Spannungen aufweisen. Würde nun die Schalteinrichtung 7 geschaltet, um Energie von einem der Gleichspannungszweige 5, 6 in den anderen Gleichspannungszweig 6, 5 zu übertragen würde es auf Grund dieser Potentialdifferenz zu sehr hohen Ausgleichsströmen zwischen den Spulen L2 und L3 oder den Spulen L4 und L5 kommen. Diese Ausgleichsströme würden die einzelnen Bauteile belasten. Daher soll eine eventuell vorhandene Potentialdifferenz vor einer Energieübertragung ausgeglichen werden.

Um diese Potentialdifferenz auszugleichen, wird ermittelt, welcher der Kondensatoren C3, C4, bzw. C5, C6, die höhere Spannung aufweist und der diesem Kondensator C3, C4, bzw. C5, C6 zugeordnete Schalter S3, S4 bzw. S5, S6 wird getaktet ein- bzw. ausgeschaltet.

Dieser Vorgang wird im Folgenden anhand eines Beispiels, in dem der Kondensator C6 ein größeres Potential als der Kondensator C5 aufweist, dargestellt. Zuerst wird der Schalter S6 geschlossen. Daraufhin baut sich ein Stromfluss von dem Kondensator C6 über die Spule L7 zu dem Gleichspannungszweig 6 auf. Dies führt dazu, dass die Spule L7 ein Magnetfeld aufbaut, in welchem Energie in Form magnetischer Energie gespeichert wird. Wird nun der Schalter S6 wieder geöffnet, führt dies zu einem abrupten abreißen des Stromflusses durch die Spule L7. Auf Grund ihrer Induktivität erzeugt die Spule L7 eine induzierte Spannung, welche an dem Abgriff 18 ein gegenüber den Abgriffen 11, 12 und 13 positives Potential erzeugt. Dadurch befindet sich die Diode D5 in Durchlassrichtung und ein Strom fließt von der Spule L7 in den Kondensator C5, wodurch das an diesem anliegende Potential erhöht wird. Dieser Ausgleichsprozess wird wiederholt, bis an dem Kondensator C5 das annähernd gleiche Potential vorhanden ist, wie an dem Kondensator C6.

Ein solcher Potentialausgleich kann auch für die Kondensatoren des zweiten Gleichspannungszweigs 5 durchgeführt werden. Insbesondere wird ein solcher Energieausgleich für die Kondensatoren desjenigen Gleichspannungszweigs 5, 6 ausgeführt, von welchem elektrische Energie übertragen werden soll.

Nachdem ein Potentialausgleich zwischen den Kondensatoren C3, C4, bzw. C5, C6 stattgefunden hat, kann eine Energieübertragung zwischen den Gleichspannungszweigen 5, 6 stattfinden. Dazu werden diejenigen Schalter S3, S4 bzw. S5, S6, welch demjenigen Gleichspannungszweig 5, 6 zugeordnet sind, aus welchem elektrische Energie in den anderen Gleichspannungszweig 6, 5 übertragen werden soll, gemeinsam getaktet ein- bzw. ausgeschaltet.

Soll beispielsweise elektrische Energie von dem Gleichspannungszweig 5 in den Gleichspannungszweig 6 übertragen werden, ist der im Folgenden beschriebene Ablauf vorgesehen.

Zuerst werden die Schalter S3 und S4 geschlossen. Dadurch fließt ein Strom durch die Spulen L2 und L3. Dies bewirkt den Aufbau eines magnetischen Feldes in den Spulen L2 und L3, welches magnetische Energie speichert. Werden nun die Schalter S3 und S4 wieder geöffnet, so übertragen die Spulen L2 und L3 die in dem magnetischen Feld gespeicherte Energie auf die Spulen L4 und L5, was in diesen einen Stromfluss hervorruft. Dieser Stromfluss wiederum führt zu einer Potentialerhöhung in den Kondensatoren C5 und C6. Die Energieübertragung zwischen den einzelnen L2, L3 und L4, L5 entspricht der Energieübertragung zwischen den Spulen eines Sperrwandlers und wird wiederholt, bis der Betrag der elektrischen Energie auf dem Gleichspannungszweig 5 dem Betrag der elektrischen Energie auf dem Gleichspannungszweig 6 entspricht.

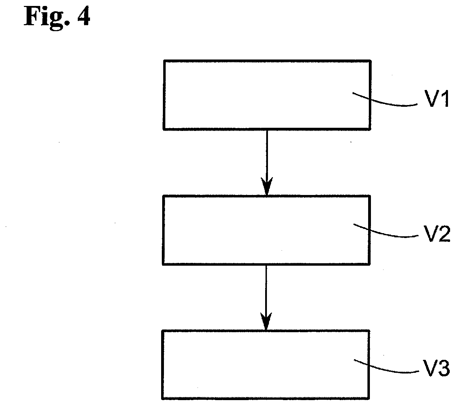

Fig. 4 zeigte ein Ablaufdiagramm einer Ausführungsform eines erfindungsgemäßen Verfahrens, welches insbesondere mit einer Photovoltaikanlage 1 nach einer der Figuren 1, 2 und 3 durchgeführt wird.

In einem ersten Schritt V1 wird eine Schalteinrichtung 7 gemäß einer der Figuren 1, 2 oder 3 bereitgestellt.

In einem zweiten Schritt V2 wird derjenige Gleichspannungszweig identifiziert, welcher die geringere elektrische Leistung aufweist.

In einem letzten Schritt V3 wird die Energie der Schalteinrichtung 7 derart ausgeglichen, dass elektrische Energie in den identifizierten Gleichspannungszweig 5, 6 mit der geringeren elektrischen Leistung übertragen wird. Das Ausgleichen V3 der Energie wird durchgeführt, solange die Gleichspannungszweige 5, 6 unterschiedliche elektrische Leistungen aufweisen.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Insbesondere kann die Erfindung auch in Vorrichtungen genutzt werden, welche eine Gleichspannung aus zwei oder mehreren in Serie geschalteten Batterien erhalten und diese mittels eines Wechselrichters in eine Wechselspannung wandeln. Dies kann z.B. in sogenannten Inselanlagen der Fall sein, in welchen durch Solarzellen erzeugte elektrische Energie in Batterien gespeichert wird, bis diese bei Bedarf in eine Wechselspannung umgewandelt wird.

### Bezugszeichenliste

- 1: Photovoltaikanlage
- 2: Gleichspannungsgenerator
- 3: Gleichspannungsgenerator
- 4: Wechselrichter
- 5: Gleichspannungszweig
- 6: Gleichspannungszweig
- 7: Schalteinrichtung
- 8: Steuereinrichtung

- 11 - 13: Abgriffe
- 14: Verbraucher und/oder Versorgungsnetzwerk
- 15 - 18: Abgriffe

- C1 - C6: kapazitives Energiespeicherelement
- D1 - D6: Dioden
- L1: induktives Energiespeicherelement
- L1a - L1b: Wicklungen eines Energiespeicherelements
- L2 - L5: Wicklungen eines Energiespeicherelements
- L6, L7: induktive Energiespeicherelemente
- S1 - S6: Schalter
- M: Bezugspotential
- V1 - V3: Verfahrensschritt

## Patentansprüche

1. Verfahren zum Erzeugen von Energie mittels einer Photovoltaikanlage (1), mit den Schritten:
Bereitstellen (V1) einer Schalteinrichtung (7), welche zwischen zumindest einem Gleichspannungsgenerator (2, 3) und einem Wechselrichter (4) angeordnet ist und welche dazu ausgebildet ist, elektrische Energie von einem ersten Gleichspannungszweig (5) in einen zweiten Gleichspannungszweig (6) oder umgekehrt zu übertragen, wobei die Schalteinrichtung (7) für jeden der beiden Gleichspannungszweige (5, 6) jeweils zwei Wicklungen eines induktive Energiespeicherelements mit insgesamt vier Wicklungen (L2, L3, L4, L5) und jeweils zwei in Serie geschaltete kapazitive Energiespeicherelemente (C3, C4, C5, C6) aufweist, wobei jeder Wicklung des induktiven Energiespeicherelements (L2, L3, L4, L5) ein Schalter (S3, S4, S5, S6) zugeordnet ist;
Identifizieren (V2) desjenigen Gleichspannungszweigs (5, 6), welcher die geringere elektrische Leistung aufweist;
Ausgleichen (V3) der Energie der Schalteinrichtung (7) derart, dass elektrische Energie in den identifizierten Gleichspannungszweig (5, 6) mit der geringeren elektrischen Leistung übertragen wird.

2. Verfahren nach Anspruch 1,
**dadurch gekennzeichnet,**
**dass** bei dem Ausgleichen der Energie der Schalteinrichtung (7) die Schalter (S3, S4, S5, S6) desjenigen Gleichspannungszweigs (5, 6), welcher die größere elektrische Leistung aufweist, bevor eine Energieübertragung stattfindet, derart geschaltet werden, dass die zwei in Serie geschalteten kapazitiven Energiespeicherelemente (C3, C4, C5, C6) desjenigen Gleichspannungszweigs (5, 6), welcher die größere elektrische Leistung aufweist, bevor eine Energieübertragung stattfindet, die gleiche elektrische Spannung aufweisen.

3. Verfahren nach einem der vorherigen Ansprüche,
**dadurch gekennzeichnet,**
**dass** der erste Gleichspannungszweig (5) ein gegenüber einem Bezugspotential (M) positives elektrisches Potential aufweist und/oder wobei der zweite Gleichspannungszweig (6) ein gegenüber dem Bezugspotential (M) negatives elektrisches Potential aufweist.

4. Verfahren nach einem der vorherigen Ansprüche,
**dadurch gekennzeichnet,**
**dass** beim Ausgleichen der Energie die Schalteinrichtung (7) derart angesteuert wird, dass nach dem Ausgleichen der Energie der erste und der zweite Gleichspannungszweig (5, 6) den gleichen Betrag der elektrischen Energie aufweisen.

5. Verfahren nach einem der vorherigen Ansprüche,
**dadurch gekennzeichnet,**
**dass** das Schalten der Schalteinrichtung (7) mittels eines pulsweiten-modulierten Steuersignals und/oder eines pulsfrequenz-modulierten Steuersignals und/oder eines pulsphasen-modulierten Steuersignals und/oder eines von einer Steuereinheit modulierten Steuersignals erfolgt.

6. Photovoltaikanlage (1),
mit mindestens einem Gleichspannungsgenerator (2, 3);
mit einem Wechselrichter (4) zur Umwandlung der von den Gleichspannungsgeneratoren (2, 3) erzeugten Gleichspannung in eine Wechselspannung, welcher über zwei Gleichspannungszweige (5, 6) mit den Gleichspannungsgeneratoren (2, 3) verbunden ist;
mit einer Schalteinrichtung (7), welche zwischen dem mindestens einen Gleichspannungsgenerator (2, 3) und dem Wechselrichter (4) angeordnet ist und welche dazu ausgebildet ist, elektrische Energie zwischen den zwei Gleichspannungszweigen (5, 6) auszugleichen;
mit einer Steuereinrichtung (8), welche dazu ausgebildet ist, denjenigen Gleichspannungszweig (5, 6) zu identifizieren, welcher die geringere elektrische Leistung aufweist, und die Schalteinrichtung (7) derart anzusteuern, dass elektrische Energie in den identifizierten Gleichspannungszweig (5, 6) mit der geringeren elektrischen Leistung übertragen wird,
wobei die Schalteinrichtung (7) jeweils zwei Wicklungen eines induktive Energiespeicherelements mit vier Wicklungen (L2, L3, L4, L5) und jeweils zwei in Serie geschaltete kapazitive Energiespeicherelemente (C3, C4, C5, C6) für die Gleichspannungszweige (5, 6) aufweist und dass jeder Wicklung des induktiven Energiespeicherelements (L2, L3, L4, L5) ein Schalter (S3, S4, S5, S6) zugeordnet ist, wobei die Steuereinrichtung (8) dazu ausgebildet ist, in Abhängigkeit des identifizierten Gleichspannungszweigs (5, 6) lediglich zwei Schalter (S3, S4, S5, S6), welche dem gleichen Gleichspannungszweig (5, 6) zugeordnet sind, zu schalten.

7. Photovoltaikanlage nach Anspruch 6,
**dadurch gekennzeichnet,**
**dass** die Schalteinrichtung (7) für jeden Gleichspannungszweig (5, 6) ein weiteres induktives Energiespeicherelement (L6, L7) aufweist und dass die Steuereinrichtung (8) dazu ausgebildet ist, zumindest zwei der Schalter (S3, S4, S5, S6) der Schalteinrichtung (7) derart zu schalten, dass die kapazitiven Energiespeicherelemente (C3, C4, C5, C6) desjenigen Gleichspannungszweigs (5, 6), welcher die größere elektrische Leistung aufweist, die gleiche elektrische Spannung aufweisen.

8. Photovoltaikanlage nach Anspruch 6 oder 7,
**dadurch gekennzeichnet,**
**dass** die Schalter (S1, S2, S3, S4, S5, S6) als IGBTs und/oder Leistungs-FETs und/oder als Bipolar-Transistoren und/oder als Leistungsschaltelemente mit integrierter oder externer Diode ausgebildet sind.

9. Photovoltaikanlage nach einem der Ansprüche 6 bis 8,
**dadurch gekennzeichnet,**
**dass** die Gleichspannungsgeneratoren (2, 3) als Solarzellen und/oder als Solarzellenstrings und/oder als Solarzellenmodule und/oder als Batterien ausgebildet sind.

10. Photovoltaikanlage nach einem der Ansprüche 6 bis 9,
**dadurch gekennzeichnet,**
**dass** die Steuereinrichtung (8) als programmgesteuerte Einrichtung, als Mikrocontroller, als Mikroprozessor, als anwendungsspezifische integrierte Schaltung, als programmierbarer Logikbaustein, als FPGA, als CPLD oder als Computerprogrammprodukt, welches auf einem von einem Computer verwendbaren Medium gespeichert ist und computerlesbare Programmmittel enthält, ausgebildet ist.

## Claims

1. Method for energy generation by a photovoltaic installation (1), with the steps:
provision (V1) of a switch device (7) arranged between at least a direct voltage generator (2, 3) and an inverter (4) and designed for transferring electrical energy from a first direct voltage branch (5) into a second direct voltage branch (6) or vice versa, wherein said switch device (7) has for each of the two direct voltage branches (5, 6) respectively two windings of an inductive energy storage element with a total of four windings (L2, L3, L4, L5) and respectively two capacitive energy storage elements (C3, C4, C5, C6) connected in series, wherein each winding of the inductive energy storage element (L2, L3, L4, L5) is assigned a switch (S3, S4, S5, S6);
identification (V2) of the direct voltage branch (5, 6) which has the lower electrical output;
compensation (V3) of the energy from the switch device (7) such that electrical energy is transferred into the identified direct voltage branch (5, 6) with the lower electrical output.

2. Method according to claim 1, **characterised in that** during compensation of the energy from the switch device (7) the switches (S3, S4, S5, S6) of the direct voltage branch (5, 6) which has the greater electrical output are operated prior to a transfer of energy such that the two capacitive energy storage elements (C3, C4, C5, C6) connected in series of the direct voltage branch (5, 6), which has the higher electrical output before a transfer of energy takes place, have the identical electrical voltage.

3. Method according to any one of the preceding claims, **characterised in that** the first direct voltage branch (5) has positive electrical potential compared with a reference potential (M) and/or wherein the second direct voltage branch (6) has negative electrical potential compared with the reference potential (M).

4. Method according to any one of the preceding claims, **characterised in that** when compensating the energy the switch device (7) is triggered such that after the energy compensation the first and second direct voltage branches (5, 6) have the identical quantity of electrical energy.

5. Method according to any one of the preceding claims, **characterised in that** the switch device (7) is operated by means of a pulse width-modulated control signal and/or a pulse frequency-modulated control signal and/or a pulse phase-modulated control signal and/or a control signal modulated by a control unit.

6. Photovoltaic installation (1),
with at least one direct voltage generator (2, 3);
with an inverter (4) for converting the direct voltage generated by the direct voltage generators (2, 3) into an alternating voltage, said inverter (4) being connected to the direct voltage generators (2, 3) via two direct voltage branches (5, 6);
with a switch device (7) which is arranged between the at least one direct voltage generator (2, 3) and the inverter (4) and is provided to compensate electrical energy between the two direct voltage branches (5, 6);
with a control device (8) which is provided to identify the direct voltage branch (5, 6) which has the lower electrical output and to trigger the switch device (7) such that electrical energy is transferred into the identified direct voltage branch (5, 6) with the lower electrical output, wherein the switch device (7) has respectively two windings of an inductive energy storage element with four windings (L2, L3, L4, L5) and respectively two capacitive energy storage elements (C3, C4, C5, C6) connected in series for the direct voltage branches (5, 6) and in that each winding of the inductive energy storage element (L2, L3, L4, L5) is assigned a switch (S3, S4, S5, S6), wherein the control device (8) is provided to operate, depending on the identified direct voltage branch (5, 6), only two switches (S3, S4, S5, S6) assigned to the identical direct voltage branch (5, 6).

7. Photovoltaic installation according to claim 6, **characterised in that** the switch device (7) for each direct voltage branch (5, 6) has an additional inductive energy storage element (L6, L7) and **in that** the control device (8) is provided to operate at least two of the switches (S3, S4, S5, S6) of the switch device (7) such that the capacitive energy storage elements (C3, C4, C5, C 6) of the direct voltage branch (5, 6) which has the higher electrical output have the identical electrical voltage.

8. Photovoltaic installation according to claim 6 or 7, **characterised in that** the switches (S1, S2, S3, S4, S5, S6) are provided as IGBTs and/or power FETs and/or as bipolar transistors and/or as power switching elements with an integrated or external diode.

9. Photovoltaic installation according to any one of claims 6 to 8, **characterised in that** the direct voltage generators (2, 3) are provided as solar cells and/or as solar cell strings and/or as solar cell modules and/or as batteries.

10. Photovoltaic installation according to any one of claims 6 to 9, **characterised in that** the control device (8) is provided as a program-controlled device, a microcontroller, a microprocessor, an application-specific integrated circuit, a programmable logic device, an FPGA, a CPLD or a computer program product which is stored on a medium useable by a computer and contains computer-readable programming means.

## Revendications

1. Procédé de génération d'énergie au moyen d'une installation photovoltaïque (1), comprenant les étapes de :
mise à disposition (V1) d'un moyen de commutation (7), qui est disposé entre au moins un générateur de tension continue (2, 3) et un onduleur (4) et qui est conçu pour transmettre de l'énergie électrique d'une première branche de tension continue (5) à une seconde branche de tension continue (6) ou inversement, le moyen de commutation (7) comportant, pour chacune des deux branches de tension continue (5, 6), respectivement deux enroulements d'un élément inductif de stockage d'énergie doté en tout de quatre enroulements (L2, L3, L4, L5) et respectivement deux éléments capacitifs de stockage d'énergie (C3, C4, C5, C6) branchés en série, un commutateur (S3, S4, S5, S6) étant associé à chaque enroulement de l'élément inductif de stockage d'énergie (L2, L3, L4, L5) ;
identification (V2) de la branche de tension continue (5, 6) qui présente la puissance électrique la plus faible ;
compensation (V3) de l'énergie du moyen de commutation (7) de telle manière que de l'énergie électrique est transmise dans la branche de tension continue (5, 6) identifiée comme ayant la puissance électrique la plus faible.

2. Procédé selon la revendication 1,
**caractérisé en ce**
**que**, lors de la compensation de l'énergie du moyen de commutation (7), les commutateurs (S3, S4, S5, S6) de la branche de tension continue (5, 6) qui présente la puissance électrique la plus élevée, avant qu'une transmission d'énergie n'ait lieu, sont commutés de telle manière que les deux éléments capacitifs de stockage d'énergie (C3, C4, C5, C6) branchés en série de la branche de tension continue (5, 6) qui présente l'énergie électrique la plus élevée, avant qu'une transmission d'énergie n'ait lieu, présentent la même tension électrique.

3. Procédé selon l'une des revendications précédentes,
**caractérisé en ce**
**que** la première branche de tension continue (5) présente un potentiel électrique positif par rapport à un potentiel de référence (M) et/ou dans lequel la seconde branche de tension continue (6) présente un potentiel électrique négatif par rapport au potentiel de référence (M).

4. Procédé selon l'une des revendications précédentes,
**caractérisé en ce**
**que**, lors de la compensation de l'énergie, le moyen de commutation (7) est commandé de telle manière qu'après la compensation de l'énergie, la première et la seconde branche de tension continue (5, 6) présentent la même quantité d'énergie électrique.

5. Procédé selon l'une des revendications précédentes,
**caractérisé en ce**
**que** la commutation du moyen de commutation (7) est effectuée au moyen d'un signal de commande à modulation d'impulsions en largeur et/ou d'un signal de commande à modulation d'impulsions en fréquence et/ou d'un signal de commande à modulation d'impulsions en position et/ou d'un signal de commande modulé par une unité de commande.

6. Installation photovoltaïque (1), comprenant :
au moins un générateur de tension continue (2, 3) ;
un onduleur (4) pour transformer la tension continue générée par les générateurs de tension continue (2, 3) en une tension alternative, qui est relié aux générateurs de tension continue (2, 3) par le biais de deux branches de tension continue (5, 6) ;
un moyen de commutation (7), qui est disposé entre l'au moins un générateur de tension continue (2, 3) et l'onduleur (4) et qui est conçu pour compenser de l'énergie électrique entre les deux branches de tension continue (5, 6) ;
un moyen de commande (8), qui est conçu pour identifier la branche de tension continue (5, 6) qui présente la puissance électrique la plus faible, et pour commander le moyen de commutation (7) de telle manière que de l'énergie électrique est transmise dans la branche de tension continue (5, 6) identifiée comme ayant la puissance électrique la plus faible,
le moyen de commutation (7) comportant respectivement deux enroulements d'un élément inductif de stockage d'énergie doté de quatre enroulements (L2, L3, L4, L5) et respectivement deux éléments capacitifs de stockage d'énergie (C3, C4, C5, C6) branchés en série pour les branches de tension continue (5, 6) et en ce qu'un commutateur (S3, S4, S5, S6) est associé à chaque enroulement de l'élément inductif de stockage d'énergie (L2, L3, L4, L5), le moyen de commande (8) étant conçu pour commuter, en fonction de la branche de tension continue (5, 6) identifiée, uniquement deux commutateurs (S3, S4, S5, S6), qui sont associés à la même branche de tension continue (5, 6).

7. Installation photovoltaïque selon la revendication 6,
**caractérisée en ce**
**que** le moyen de commutation (7) comporte un élément inductif de stockage d'énergie (L6, L7) supplémentaire pour chaque branche de tension continue (5, 6) et **en ce que** le moyen de commande (8) est conçu pour commuter au moins deux des commutateurs (S3, S4, S5, S6) du moyen de commutation (7) de telle manière que les éléments capacitifs de stockage d'énergie (C3, C4, C5, C6) de la branche de tension continue (5, 6) qui présente la puissance électrique la plus élevée, présentent la même tension électrique.

8. Installation photovoltaïque selon la revendication 6 ou 7,
**caractérisée en ce**
**que** les commutateurs (S1, S2, S3, S4, S5, S6) sont réalisés sous la forme de transistors IGBT et/ou de transistors de puissance à effet de champ et/ou de transistors bipolaires et/ou d'éléments de commutation de circuit de puissance à diode intégrée ou externe.

9. Installation photovoltaïque selon l'une des revendications 6 à 8,
**caractérisée en ce**
**que** les générateurs de tension continue (2, 3) sont réalisés sous la forme de cellules solaires et/ou de strings de cellules solaires et/ou de modules de cellules solaires et/ou de batteries.

10. Installation photovoltaïque selon l'une des revendications 6 à 9,
**caractérisée en ce**
**que** le moyen de commande (8) est réalisé sous la forme d'un système commandé par programme, d'un microcontrôleur, d'un microprocesseur, d'un circuit intégré propre à une application, d'une puce logique programmable, d'un FPGA, d'un CPLD ou d'un produit-programme informatique, qui est enregistré sur un support utilisable par un ordinateur et qui contient des moyens de programme lisibles par ordinateur.
